# EUROPEAN PATENT SPECIFICATION

(11) **EP 2 739 431 B1**
(45) Date of publication and mention of the grant of the patent: **24.06.2020**
(21) Application number: 12756541.4
(22) Date of filing: 02.08.2012
(51) Int. Cl.: B23K 35/02, B23K 35/26, B23K 35/30, B23K 35/36, B22F 1/00

(54) **SOLDER COMPOSITIONS**
LÖTZUSAMMENSETZUNGEN
COMPOSITIONS DE BRASAGE

(30) Priority: 02.08.2011 US 201161514396 P
(43) Date of publication of application: 11.06.2014
(73) Proprietor: Alpha Assembly Solutions Inc., Waterbury CT 06702 (US)
(72) Inventor: DE AVILA RIBAS, Morgana, New Jersey 07080-2409 (US); LODGE, Dominic, Woking Surrey GU21 5RZ (GB); PANDHER, Ranjit, New Jersey, NJ 07080 (US); SINGH, Bawa, South Plainfield, NJ 07080 (US); BHATKAL, Ravindra M, South Plainfield, NJ 07080 (US); RAUT, Rahul, South Plainfield, NJ 07080 (US); SARKAR, Siuli, New Jersey 07080-2409 (US); CHATTOPADHYAY, Kamanio, New Jersey 07080-2409 (US); NANDI, Proloy, New Jersey 07080-2409 (US)
(74) Representative: Boult Wade Tennant LLP
(86) International application number: PCT/GB2012/051876
(87) International publication number: WO 2013/017885

(56) References cited:
- WO-A1-01/89757
- JP-A- 11 347 784
- JP-A- 2001 259 884
- JP-A- 2003 245 793
- JP-A- 2005 000 956
- JP-A- 2005 319 470
- JP-A- 2006 326 598
- US-A- 2 950 184
- US-A1- 2006 061 974
- US-A1- 2007 227 627
- US-A1- 2008 160 331
- US-A1- 2010 243 107

## Description

The present invention relates to a solder composition, in particular to a lead-free solder composition. The solder composition is comprised of two or more components to provide improved characteristics to the solder.

Lead-free solder alloys are well known and provide non-toxic alternatives to the most widely used solder alloy - eutectic 37%Pb-63%Sn alloy. Examples of such lead-free alloys include the binary eutectic 58%Bi-42%Sn alloy (see, for example, US 5,569,433 B) and the binary 40%Bi-60%Sn alloy (see, for example, US 6,574,411 A). Such alloys exhibit a loss of ductility at high strain rates, which can be improved by the addition of small amounts of additives, such as up to 1% by weight silver (see, for example, US 5,569,433 B). However, the impact energies exhibited by these alloys, measured using the Charpy Impact Test, are relatively low. Accordingly, there is a need to develop lead-free solder alloys which exhibit improved impact toughness.

In order for such lead-free alloys to be used in soldering methods such as wave and reflow soldering, the alloys must exhibit good wettability in relation to a variety of substrate materials such as copper, nickel and nickel phosphorus ("electroless nickel"). Such substrates may be coated to improve wetting, for example by using tin alloys, silver, gold or organic coatings (OSP). Good wetting also enhances the ability of the molten solder to flow into a capillary gap, and to climb up the walls of a through-plated hole in a printed wiring board, to thereby achieve good hole filling.

Furthermore, solder compositions need to exhibit a good thermal fatigue life and decreased high temperature creep. Improved ductility and thermal and electrical conductivity are also desirable. These properties can be achieved by selecting a specific solder alloy if one is known, or through the use of specific additives. However, it would be advantageous if the properties of existing commonplace solders could be adapted to provide these benefits without requiring alternative solder alloys to be developed.

Accordingly, there is a desire for a solder composition that will overcome, or at least mitigate, some or all of the problems associated with the solders of the prior art or at least a useful or optimized alternative. JP2003245793A relates to a soldering composition, soldering method, and electronic component.

According to a first aspect, the present invention provides a solder composition according to claim 1.

The present disclosure will now be further described. In the following passages different aspects of the disclosure are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

The term "solder alloy" used herein refers to a fusible metal alloy with a melting point in the range of from 90 - 400 degrees C.

The "Charpy impact test" referred to herein, also known as the Charpy v-notch test, is a standardized high strain-rate test which determines the amount of energy absorbed by a material during fracture. This absorbed energy is a measure of a given material's toughness and acts as a tool to study temperature-dependent brittle-ductile transition. Further details regarding this test can be found in Charpy Impact Test: Factors and Variables, J. M. Holt, ASTM STP 1072, the contents of which is hereby incorporated by reference.

The term "wettability" used herein refers to the degree to which solder spread on a wettable surface. Wettability is determined by surface tension of the liquid solder and its ability to react with the wettable surface. Wetting can also be described in terms of the contact angle of the molten and subsequently frozen solder alloy on a substrate, with lower contact angles being favoured over high contact angles.

The term "wave soldering" used herein refers to the large-scale soldering process by which electronic components are soldered to a printed circuit board (PCB) to form an electrical assembly.

The term "reflow soldering" used herein refers to the process where solder paste is printed or dispensed, or a solder perform is placed on the surface of a printed circuit board, components are placed in or near the deposited solder, and the assembly is heated to a temperature above the liquidus of the solder alloy.

The term "rare earth element" used herein refers to an element selected from Sc, Y, La, Ce, Pr, Nd, Pm, Sm, Eu, Gd, Tb, Dy, Ho, Er, Tm, Yb and Lu.

All percentages herein are by weight unless expressly stated otherwise.

Preferably at least one of the powders is spherical, preferably both. That is, at least 90% of the particles have a length-to-width ratio of less that 1.5. Preferably at least 95%, more preferably at least 98%, of the particles have a length-to-width ratio of less that 1.5. For most applications this high degree of "sphericity" is preferred, the major advantage being lower surface area, which minimizes oxidation, and better load acceptance (less tendency for clogging and interlocking), which assists dispensability and release through a stencil aperture. In an alternative embodiment, at least one of the powders may be irregular.

Particle roundness influences paste viscosity and the tendency to shear. Spheres offer less resistance to viscous flow compared with particles of irregular shape. Accordingly, paste made from the same flux and spherical powder will have lower viscosity than those of the same weight percent and particle size range but of irregular shape. One possible advantage with pastes of the latter appearance is that they are less likely to shear thin when screen/stencil printed at high speed and constant squeegee motion. Interlocking of the powder reduces paste flow out. Reduction of shear thinning is important because it will prevent slumping and smearing which can result in solder bridging and solder balling.

Preferably the solder powder particles are from 1 to 100 microns in mean diameter. More preferably the particles are from 1 to 75 microns in mean diameter, most preferably 1 to 50 microns. The diameter measurement refers to the longest diameter of the particle. Preferably the powder particles of both the first and second components are substantially the same.

Preferably the solder composition consists of the blend of the first powder component and the second powder component, together with unavoidable impurities. It will be appreciated that the composition according to the present invention may contain unavoidable impurities, possibly as part of the first and/or second components, although, in total, these are unlikely to exceed 1 wt% of the composition. Preferably, the alloys contain unavoidable impurities in an amount of not more than 0.5 wt% of the composition, more preferably not more than 0.3 wt% of the composition, still more preferably not more than 0.1 wt% of the composition.

Preferably the solder composition is lead-free. This allows the composition to comply with regulatory requirements.

The inventors have discovered that it is possible to engineer the effective melting temperature, and the mechanical, electrical and thermal properties of a reflowed solder using standard solder alloy and/or metal powders.

In particular, as a reference example, the inventors have discovered that a mixture of two or more solder alloys is particularly useful. In particular, where the first and second solder alloys have different melting points, during the first reflow, which goes up to a peak temperature of above the liquidus of the lower melting alloy but below the solidus of the other powder, the high temperature alloy powder particles dissolve quickly into the liquid phase of the low temperature alloy.

As the mixing progresses, the composition of the solder is quickly changing. This makes the solidification process highly nonlinear because the liquidus temperature of the mixed composition is also continuously increasing until the alloys are completely mixed.

Preferably the melting points differ by at least 5°C. More preferably the melting points differ by at least 10°C. The greater the difference in melting points, the more pronounced the improved characteristics are that can be obtained from the known solder compositions.

Preferably in the reference example the first and second solder alloys comprise at least one common element. This facilitates a quick dissolution of one alloy into the other at temperatures close to or sometimes even below the melting point of one of the alloys. Preferably the at least one common element is tin.

For example a 20% of SAC305 powder mixed with 80% of eutectic 42Sn58Bi results in increasing the liquidus of the final composition to approximately 165°C from 138°C of the original 42Sn58Bi. This is because the addition of Sn shifts the alloy composition away from the SnBi eutectic. In addition, small amounts of Ag and Cu coming in from SAC305 change the microstructure of the alloys providing additional improvements in the final solder properties.

These forgoing process changes occur during the first reflow. Thus, the first reflow can be carried out at a lower temperature than would be required for the final blend. Before reflow it is a mixture of two separate alloys.

As a consequence of the forgoing composition it has been found that the presence of the higher melting component leads to an increase in liquidus temperature and, thus, a decrease in the homologous temperature at same operating temperatures. This means an automatic increase in thermal fatigue life and a decrease in high temperature creep. The homologous temperature allows comparison of different solder compositions.

For example, a solder having a working temperature range of -55°C to 125°C and a melting (liquidus) temperature of 183°C (456K) is working at from 0.53Tₘₚ to 0.92Tₘₚ. Increasing the melting temperature to 195°C reduces this range to from 0.49 Tₘₚ to 0.85 Tₘₚ. Thus, the tensile strength, shear strength and modulus of elasticity are improved.

In addition, the decrease in fraction of Bi content in the solder improves its ductility. The presence of small amount of Ag and Cu improves ductility, thermal and electrical conductivity and refines the solder microstructure, leading to enhanced mechanical properties.

In a preferred embodiment of the reference example, the first powder component forms about 80% by weight of the solder composition and is 42Sn 58Bi, and wherein the second powder composition forms about 20% by weight of the solder composition and is SAC305 (96.5% Sn, 0.5% Cu, 3% Ag). Preferably the solder composition consists of the forgoing components. It will be appreciated that while this example represents a preferred composition, the final composition may be selected from any alloys and mixtures in suitable proportions.

In an aspect relatying the present invention, the present inventors have discovered that a mixed powder of a metal and a solder alloy powder has surprising benefits, i.e. the solder composition of claim 1. Without wishing to be bound by theory, it is believed that during reflow, solder forms intermetallic bonds with the metal particles. Under a single long reflow or multiple reflow cycles, some of the metal from the metal particles is dissolved into the bulk solder while the rest remains in its original form. This results in a mixture of solder and metals particles forming a composite structure. Thus, the metal powder addition can improve compliance of the resultant solder joint, and improve thermal and electrical conductivity. A reference example is copper powder mixed with SnBi alloy. SnBi is a brittle alloy with relatively poor thermal and electrical conductivity. Addition of Cu particles in solder bulk improves it electrical and thermal conductivity. Another example is addition of nano and micro sized Ag particles to improve its mechanical strength and enhance electrical and thermal conductivity.

However, during the initial reflow step, the composition melts at the melting temperature of the solder alloy. As a consequence, unique properties of the solder can be achieved while still having an easy to melt and handle solder composition.

The second powder component is a metal, and it is preferably Ag. Other metals that may be present include one or more of Au, Cr, Sc, Y, Co, Ge, Mn, and Ti or rare earth elements. Metal powder size and level can be selected to tailor thermal, mechanical and electrical properties of the final solder joint.

In the foregoing compositions, the second powder component can have a particle size ranging from smaller than to larger than the first solder powder. In one preferred embodiment, the particle size of the second powder is substantially the same size as the first solder powder. That is, the second powder comprises particles are from 0.02 to 100 microns in mean diameter. More preferably the particles are from 0.02 to 75 microns. Still more preferably the particles are from 0.02 to 50 microns. In certain situations, particle size between 0.02 and 5 microns are preferred. In one embodiment, the particles, in particular the metal particles, are preferably from 1nm to 100 microns, more preferably from 10nm to 100 microns. The metal particles may be from 10 microns to 100 microns. Alternatively, the metal particles may have a mean diameter of from 100 microns to 1000 microns.

In a reference example, the present inventors have discovered that a mixed powder of two immiscible alloys with similar melting temperature but a different Solid-Liquid phase transition is advantageous. Thus the first and second solder alloys have similar melting temperatures and are immiscible. For example, some Bi containing alloys expand during liquid-solid transition (negative Coefficient of thermal expansion (CTE)) while many others shrink (positive CTE). The inventors have discovered that by mixing particles of a positive CTE alloy that has similar melting temperature with a negative CTE SnBi they can obtain a low-stress solder joint formation. They have further discovered that this will happen when the two alloys do not mix on heating (i.e. are immiscible). If they dissolve in each other then the resultant alloy could have its own characteristic transition.

In the foregoing compositions, the second powder component preferably has particle sizes that are comparable with those of the first powder component. That is, the second powder comprises particles are from 1 to 100 microns in mean diameter. More preferably the particles are from 1 to 75 microns in mean diameter, most preferably 1 to 50 microns. Preferably the particle sizes of the first and second powders are substantially the same since this facilitates easy handling and mixing.

By similar melting temperatures it is preferably meant that the first and second solder alloys have a melting temperature within at most 25°C. More preferably the first and second solder alloys have a melting temperature within at most 10°C and most preferably within 1°C.

Preferably the coefficient of thermal expansion of the first solder alloy is positive and the coefficient of thermal expansion of the second solder alloy is negative.

In order to ensure that the powders are immiscible with each other, preferably at least the second powder component has a non-reactive coating layer. This allows for the use of known powders to achieve the advantageous benefits of the present invention.

Preferably the solder composition further comprises a further powder component selected from materials such as carbides, nitrides, oxides and carbon nanotubes, preferably selected from Al₂O₃, SiO₂, TiO, NiO and carbon nanotubes. These components are preferably sized in accordance with the solder and metal particles described herein. That is, preferably having a longest average diameter on the micron scale; preferably from 0.02 to 100 microns.

These components have surprisingly been found to allow for alloy microstructure modification after reflow. As a consequence, the mechanical properties and thermal fatigue life of the alloy can be improved.

According to a reference example, there is provided a solder composition comprising a blend of a first powder component and a second powder component, wherein the first powder component is a first solder alloy and the second powder component is selected from materials such as: carbides, nitrides, oxides and carbon nanotubes, preferably selected from materials such as: Al₂O₃, SiO₂, TiO, NiO and carbon nanotubes. Preferably, the second powder component is one or more of Al₂O₃, SiO₂, TiO, NiO and carbon nanotubes. The components of this aspect correspond to those in the foregoing aspects. For example, the first powder component for use in this aspect may be the same as any first powder component described herein.

According to a further aspect of the present invention, there is provided a solderable paste comprising the solder composition of the invention as described herein. That is, the paste comprises the powder blend of the present invention together with a flux. Suitable fluxes are well known in the art.

The compositions of the present invention may then be processed into the form of a bar, a stick, a solid or flux cored wire, a foil or strip, a pre-form, a pre-applied or free standing film or solder spheres for use in ball grid array joints, or a pre-formed solder piece or a reflowed or solidified solder joint.

According to a further aspect of the present invention, there is provided a method of forming the solder composition of the invention as described herein, the method comprising mixing powder components.

According to a further aspect of the present invention, there is provided the use of the composition of the invention as described herein or the solderable paste as described herein in a soldering method.

According to a further aspect of the present invention, there is provided the use of the composition of the invention as described herein or the solderable paste as described herein to form a soldered joint.

In a further aspect, the present invention provides a soldered joint comprising an alloy of invention.

In a further aspect, the present invention provides the use of an alloy of the invention in a soldering method. Such soldering methods include, but are not restricted to, wave soldering, Surface Mount Technology (SMT) soldering, die attach soldering, thermal interface soldering, hand soldering, laser and RF induction soldering, and rework soldering.

In a further aspect, the present invention provides a method of forming the above described solder composition of the invention, the method comprising mixing. Preferably the first component is a paste and/or the second component is in the form of a powder, paste, strip, foil, sphere, disc or a preform.

A reference example provides a method of forming a solder joint comprising:
(i) providing two or more work pieces to be joined;
(ii) providing a first solder component having a first reflow temperature;
(iii) providing a second solder component having a second reflow temperature that is higher than said first reflow temperature; and
(iv) heating said first and second solder components in the vicinity of the work pieces to be joined, wherein said heating is carried out at or above the first reflow temperature and below the second reflow temperature.

The work pieces to be joined may be, for example, a circuit board and a circuit component. The method may be used, for example, in the manufacture of printed circuit boards. The first solder component may be a first alloy component, and may be in the form of a powder, paste, strip, foil, sphere, disc or a preform, preferably a paste. The second solder component may be a second solder alloy or a metal, and may be in the form of a powder, paste, strip, foil, sphere, disc or a preform. Once the solder components have been mixed, they may be heated at a temperature lower than the reflow temperature of the first solder component. An example of the above described method is as follows:
A method of assembly, comprising:
applying solder paste to a printed circuit board to form a solder paste deposit;
placing a low temperature preform in the solder paste deposit;
processing the printed circuit board at a reflow temperature of the solder paste to create a low temperature solder joint; and
processing the low temperature solder joint at a reflow temperature that is lower than the reflow temperature of the solder paste.

The invention will now be described with reference to the following non-limiting examples.

A reference example solder composition was prepared comprising a 42Sn 58Bi powder component in an amount of about 80% by weight of the solder composition and about 20% by weight of a SAC305 powder (96.5% Sn, 0.5% Cu, 3% Ag). On testing it was found that the alloy had improved ductility, thermal fatigue and creep resistance compared to the 42Sn 58Bi powder alone.

A reference example solder composition was prepared comprising a 42Sn 58Bi powder component in an amount of about 80% by weight of the solder composition and about 20% by weight of a Copper metal powder. On testing it was found that the alloy had improved ductility, thermal fatigue resistance and electrical conductivity compared to the 42Sn 58Bi powder alone.

A reference example solder composition was prepared comprising two bismuth-containing alloys. One of the alloys selected expands during liquid-solid transition (-ve CTE) and the other shrinks (+ve CTE). This composition was found to give rise to a low-stress solder joint.

Two solder reference example compositions were prepared. The first comprised 82.9 wt% SAC305 and 17.1 wt% Sn58Bi, and the second contained 82.9 wt% SACX0307 (Sn0.3Ag0.7Cu0.1Bi) and 17.1 wt% Sn58Bi. Measurement of the chip shear resistance and the pin pull resistance indicated that the values were comparable with the benchmark alloy Sn57.6Bi0.4Ag.

The present application includes, by way of example, the following figures:

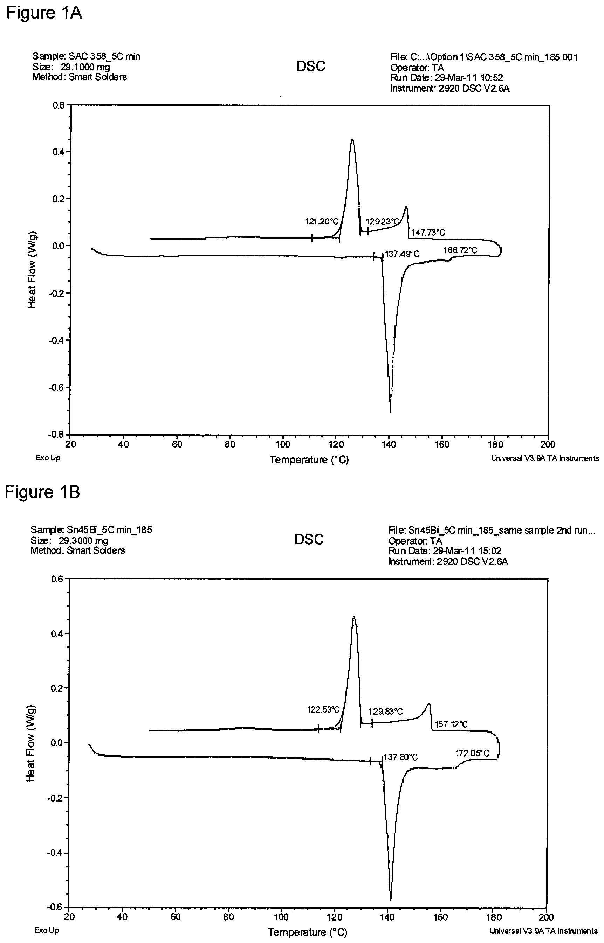

Figures 1A and 1B show differential scanning calorimetry (DSC) traces of the melting of two solder compositions (samples sizes: 29.1000 mg and 29.3000 mg, respectively; instrument: 2920 DSC V2.6A). The first is a mixture of 20% SAC and 80% Sn58Bi. The second is Sn45Bi. These traces are similar, although SAC has a melting point of 217°C. The SAC dissolves into the Sn58Bi well below the melting temperature of SAC. At the same time, it has been found that the first mixture shows significantly higher shear force in a ball shear test than Sn58Bi alone (949 vs 911). DSC traces were also obtained for a mixture of 17.1% Sn58Bi and 82.9% Sn0.3Ag0.7Cu0.1Bi (SACX0307). The initial scan showed a low temperature peak corresponding to the melting of SnBi alloy. However, this peak disappeared on subsequent scans, indicating that all low temperature phase is converted into high temperature phase by dissolving SACX0307 into liquid Sn58Bi.

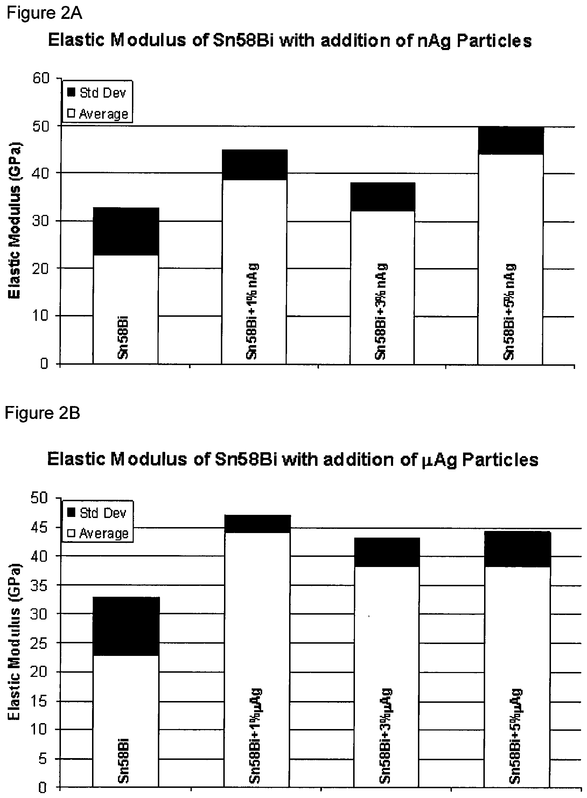

Figures 2A and 2B show the improvement in the elastic modulus of SnBi on the addition of nano or micro sized Ag particles. In the former, the particles are nano sized, having an average particle size of from 20 nanometers to 1 micron. In the latter, the AG particles are from 1 micron to 100 microns in size. As can be seen, even a small amount (1%) of AG particles has been found to have a significant effect on the elastic modulus. Addition of silver particles improves thermal and electrical conductivities of the solder. Presence of free silver particles in the Sn58Bi solder has surprisingly been found to increase its thermal conductivity by more than 50%. Furthermore, the silver addition changes the alloy microstructure. Even up to 5%Ag addition has surprisingly been found to not result in long Ag₃Sn crystals. In Figure 2A elastic modulus values are shown for the following solders (from left to right): Sn58Bi, a mixture of Sn58Bi + 1% nano sized Ag, a mixture of Sn58Bi + 3% nano sized Ag and a mixture of Sn58Bi + 5% nano sized Ag. In Figure 2B elastic modulus values are shown for the following solders (from left to right): Sn58Bi, a mixture of Sn58Bi + 1% micron sized (from 1 to 100 microns) Ag, a mixture of Sn58Bi + 3% micron sized Ag and a mixture of Sn58Bi + 5% micron sized Ag.

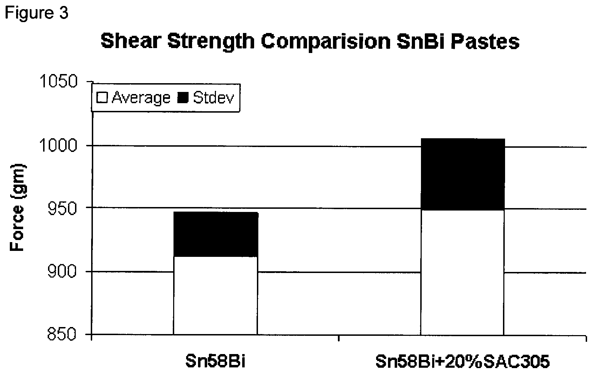

Figure 3 shows a comparison of the shear strengths of a standard Sn58Bi solder (left hand side) and that of a solder composition according to invention reference example (Sn58Bi+20%SAC305). Addition of SAC305 powder to Sn58Bi powder results in a final composition with lower Bi after reflow and which also shows a higher shear strength

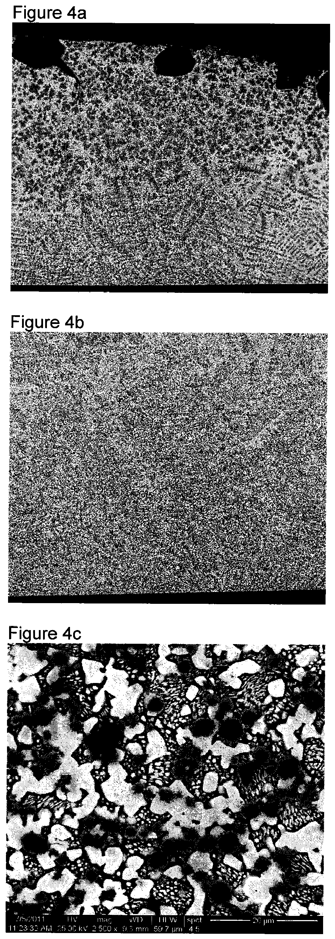

Figures 4a-c show a range of micrographs showing the crystal structure of a number of solder compositions as described herein. Figures 4a and 4b show the microstructure of Sn45Bi and Sn58Bi alloys respectively, each with the addition of Al₂O₃. In each case, Alumina powder was added to a paste flux which was printed on a copper coupon. Thin preforms of Sn45Bi and Sn58Bi were placed on the flux. Heated on a hot plate at 185 C and cooled in air. Due to diffusion of Alumina particles into the solder, the solder microstructure is markedly refined near the interface.
Figure 4c shows a micrograph of an Sn58Bi alloy with copper particles. As can be seen, copper particles are uniformly distributed in the SnBi alloy matrix. A CuSn IMC layer is seen at the surface of the particles but bulk of the particles is pure copper.

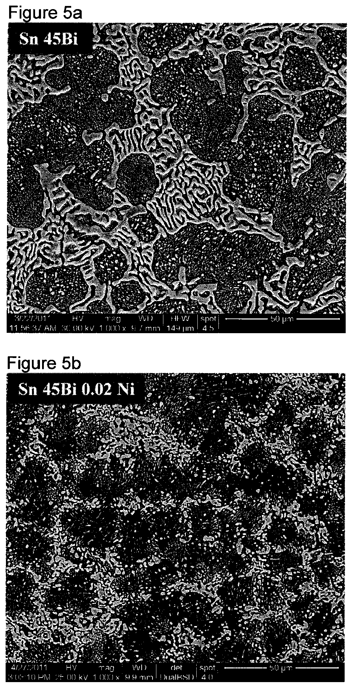

Figure 5a and 5b demonstrate the addition of Nickel into a Sn45Bi solder alloy. In figure 5a, there is no Ni present. In figure 5b, there is included 0.02 Ni and this has a significant grain refining effect.

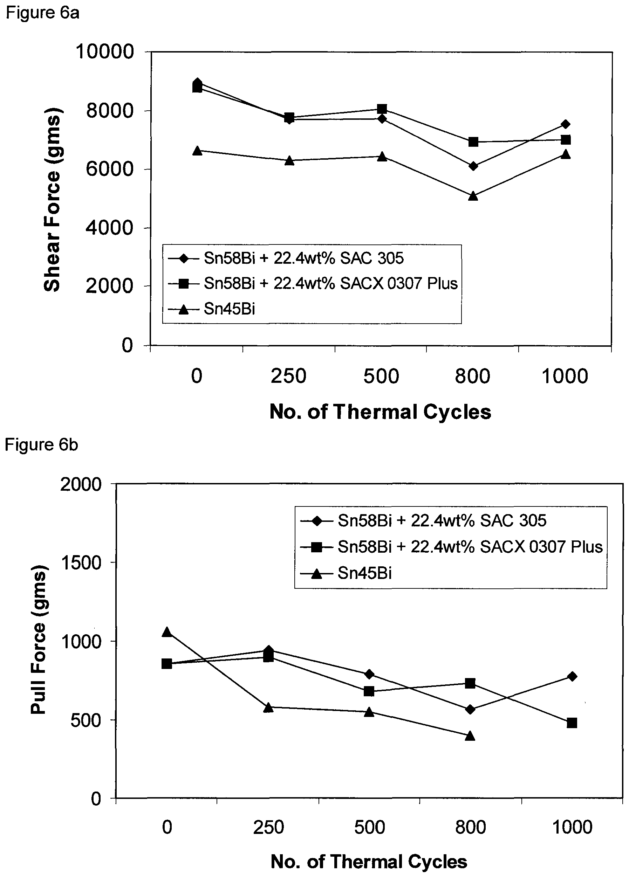

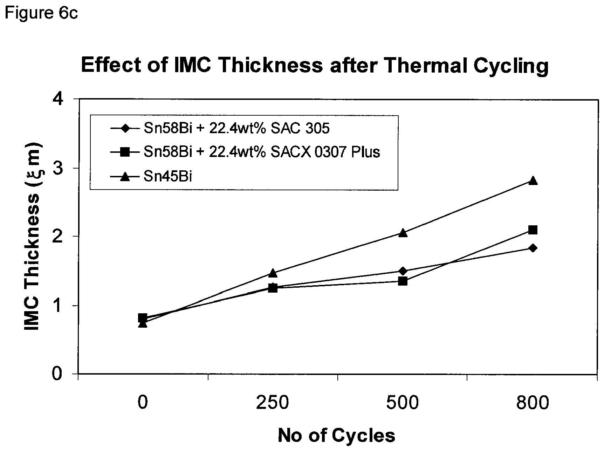

Figure 6a, 6b and 6c indicate the changes in shear force (6a), pull force (6b) and intermetallic compound (IMC) growth (6c) during thermal cycling for a mixture of Sn58Bi + 22.4wt% SAC305 (diamonds), a mixture of Sn58Bi + 22.4wt% SACX0307 (squares) and Sn45Bi (triangles). The thermal cycling conditions were from -40 to 125 °C, 10 minutes dwell time and 1000 cycles. Figures 6a and 6b indicate that the shear force and pull force (lead pull resistance) values of the solders of the present invention decrease less after thermal cycling that Sn45Bi. Figure 6c indicates that IMC growth during thermal cycling is much lower for the solders of the present invention compared to Sn45Bi, which indicates a much better solder joint reliability for the solders of the present invention.

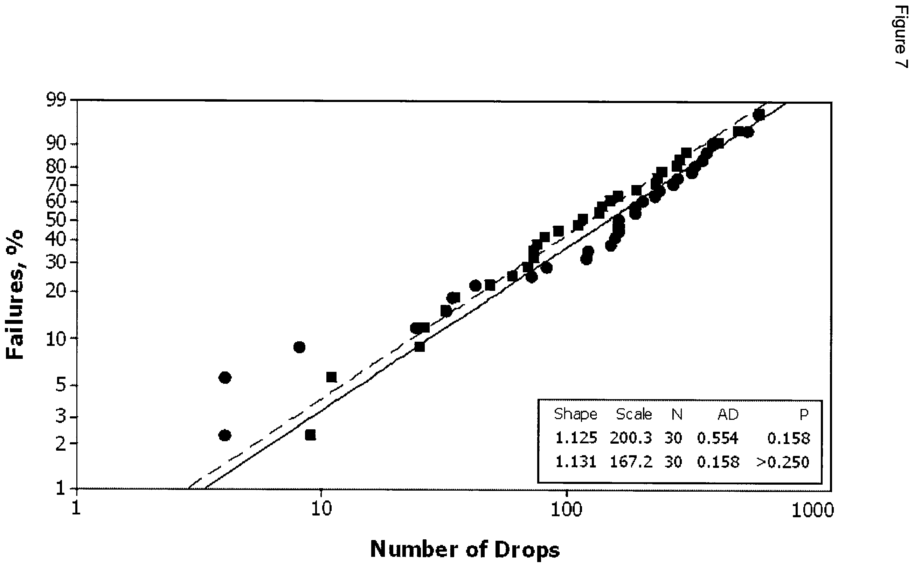

Figure 7 shows drop shock resistance data for a mixture of Sn58Bi + SAC305 (circles) and Sn45Bi (squares). The drop shock resistance of the mixture of Sn58Bi + SAC305 is clearly higher (average number of drops to failure: 200.3) than that of Sn45Bi (average number of drops to failure: 167.2).

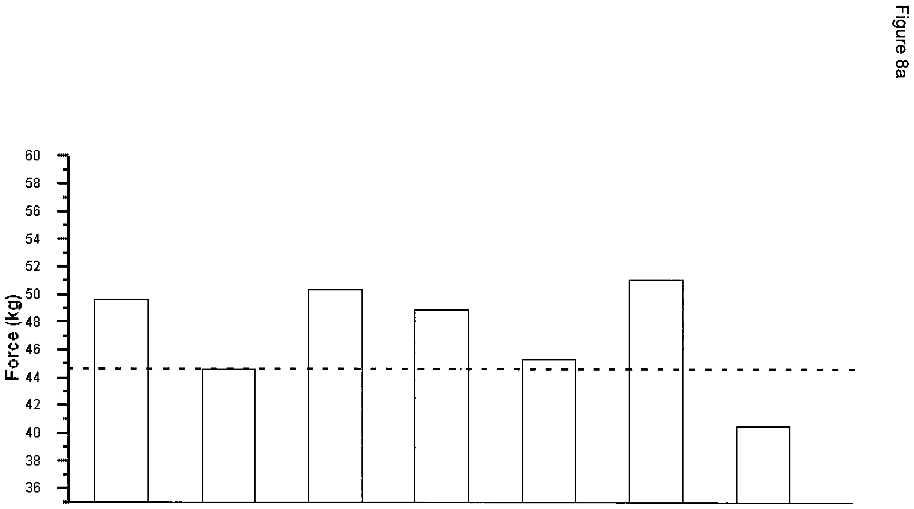

Figure 8a demonstrates the shear strength values for the alloys (from left to right): Sn58Bi (as cast), Sn58Bi (48 hours after casting), a mixture of Sn58Bi + 1 wt% micron sized Ag particles (48 hours after casting), a mixture of Sn58Bi + 3 wt% micron sized Ag particles (48 hours after casting), a mixture of Sn58Bi + 1 wt% micron sized Ag coated Cu particles (48 hours after casting), a mixture of Sn58Bi + 3 wt% micron sized Ag coated Cu particles (48 hours after casting) and a mixture of Sn58Bi + 5 wt% micron sized Ag coated Cu particles (48 hours after casting). The addition of Ag recovers the shear strength that is lost as a result of aging (an increase of 14.6 % for 3 wt% Ag particles).

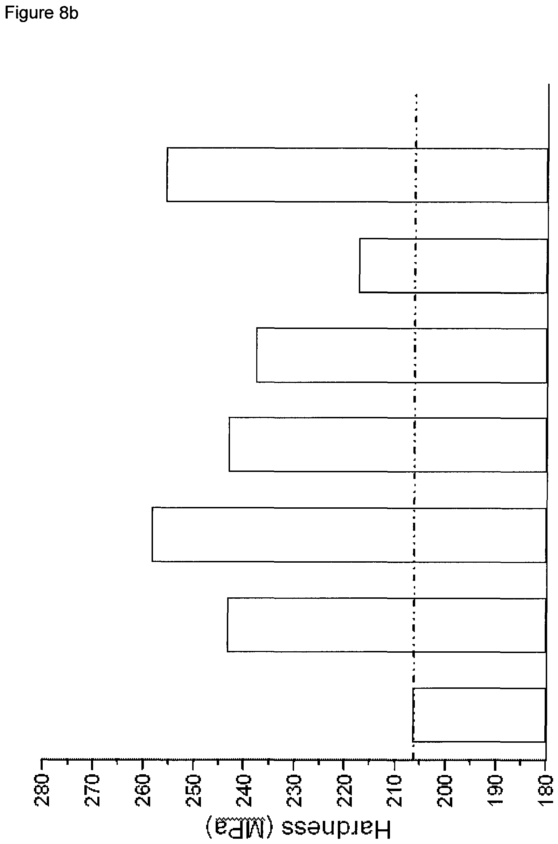

Figure 8b demonstrates the hardness values for the alloys (from left to right): Sn58Bi, a mixture of Sn58Bi + 1 wt% micron sized Ag particles, a mixture of Sn58Bi + 3 wt% micron sized Ag particles, a mixture of Sn58Bi + 5 wt% micron sized Ag particles, a mixture of Sn58Bi + 1 wt% nanometer sized Ag particles, a mixture of Sn58Bi + 3 wt% nanometer sized Ag particles, and a mixture of Sn58Bi + 5 wt% nanometer sized Ag particles, The hardness increases up to 25 % with the addition of 3 wt% micron sized Ag particles.

The presently claimed compositions are useful for applications including, but not limited to, LED assembly, photovoltaic cell tabbing and stringing, semiconductor backend process, and Die attachment. Final form factor is application dependent but the solder can be made into any form, including, but not limited to, paste, perform, film, and wire, and can be combined with cleanable or no-clean flux chemistry.

When introducing elements of the present disclosure or the preferred embodiments(s) thereof, the articles "a", "an", "the" and "said" are intended to mean that there are one or more of the elements. The terms "comprising", "including" and "having" are intended to be inclusive and mean that there may be additional elements other than the listed elements.

The foregoing detailed description has been provided by way of explanation and illustration, and is not intended to limit the scope of the appended claims.

## Claims

1. A solder composition comprising a blend of a first powder component and a second powder component, wherein the first powder component is a first solder alloy, the first solder alloy being SnBi, and the second powder component is a metal selected from Ag, Au, Cr, In, Sc, Y, Ce, Co, Ge, Mn, and Ti or rare earth elements.

2. The solder composition of claim 1, wherein the metal is Ag.

3. The solder composition according to any preceding claim, wherein the solder composition is lead-free.

4. The solder composition according to any preceding claim, wherein the metal particles are: (i) from 1nm to 100 microns; or (ii) from 10nm to 100 microns; or (iii) from 100 microns to 1000 microns.

5. The solder composition according to any of the preceding claims, wherein the solder composition further comprises a further powder component selected from a carbide, a nitride, an oxide, carbon nanotubes, preferably selected from Al₂O₃, SiO₂, TiO, NiO and carbon nanotubes.

6. A solderable paste, a film, a strip, a foil, a wire, a preform or a sphere comprising the solder composition of any of claim 1 to 5.

7. A method of forming the solder composition of any of claims 1 to 5, the method comprising mixing powder components.

8. The method of claim 7 wherein the first powder component is in the form of a paste and the second powder component is in the form of a preform, a strip, a sleeve, discs, spheres or a wire.

9. The use of the composition according to any of claims 1 to 5 or the solderable paste according to claim 6 in a soldering method.

10. A soldered joint comprising the composition of any of claims 1 to 5.

## Patentansprüche

1. Lötzusammensetzung, umfassend eine Mischung aus einer ersten Pulverkomponente und einer zweiten Pulverkomponente, wobei die erste Pulverkomponente eine erste Lötlegierung ist, wobei die erste Lötlegierung SnBi ist, und die zweite Pulverkomponente ein Metall ist, ausgewählt aus Ag, Au, Cr, In, Sc, Y, Ce, Co, Ge, Mn und Ti oder Seltenerdelementen.

2. Lötzusammensetzung nach Anspruch 1, wobei das Metall Ag ist.

3. Lötzusammensetzung nach einem der vorangehenden Ansprüche, wobei die Lötzusammensetzung bleifrei ist.

4. Lötzusammensetzung nach einem der vorangehenden Ansprüche, wobei die Metallteilchen folgendermaßen sind: (i) von 1 nm bis 100 µm; oder (ii) von 10 nm bis 100 um; oder (iii) von 100 µm bis 1000 µm.

5. Lötzusammensetzung nach einem der vorangehenden Ansprüche, wobei die Lötmittelzusammensetzung weiterhin eine weitere Pulverkomponente umfasst, die aus einem Carbid, einem Nitrid, einem Oxid, Kohlenstoffnanoröhren ausgewählt ist, vorzugsweise aus Al₂O₃, SiO₂, TiO, NiO und Kohlenstoffnanoröhren ausgewählt ist.

6. Lötbare Paste, ein Film, ein Streifen, eine Folie, ein Draht, eine Vorform oder eine Kugel, umfassend die Lötzusammensetzung nach einem der Ansprüche 1 bis 5.

7. Verfahren zur Bildung der Lötzusammensetzung nach einem der Ansprüche 1 bis 5, wobei das Verfahren das Mischen von Pulverkomponenten umfasst.

8. Verfahren nach Anspruch 7, wobei die erste Pulverkomponente in Form einer Paste vorliegt und die zweite Pulverkomponente in Form eines Vorformlings, eines Streifens, einer Hülse, von Scheiben, von Kugeln oder eines Drahtes vorliegt.

9. Verwendung der Zusammensetzung nach einem der Ansprüche 1 bis 5 oder der lötbaren Paste nach Anspruch 6 bei einem Lötverfahren.

10. Lötnaht umfassend die Zusammensetzung nach einem der Ansprüche 1 bis 5.

## Revendications

1. Composition de brasage comprenant un mélange d'un premier composant en poudre et d'un second composant en poudre, dans laquelle le premier composant en poudre est un premier alliage de brasage, le premier alliage de brasage étant SnBi, et le second composant de poudre est un métal choisi parmi Ag, Au, Cr, In, Sc, Y, Ce, Co, Ge, Mn et Ti ou éléments de terres rares.

2. Composition de brasage selon la revendication 1, dans laquelle le métal est Ag.

3. Composition de brasage selon l'une quelconque des revendications précédentes, dans laquelle la Composition de brasage est sans plomb.

4. Composition de brasage selon l'une quelconque des revendications précédentes, dans laquelle les particules métalliques sont : (i) de 1 nm à 100 microns ; ou (ii) de 10 nm à 100 microns ; ou (iii) de 100 microns à 1 000 microns.

5. Composition de brasage selon l'une quelconque des revendications précédentes, dans laquelle la composition de brasage comprend en outre un composant en poudre supplémentaire choisi parmi un carbure, un nitrure, un oxyde, des nanotubes de carbone, de préférence choisi parmi Al₂O₃, SiO₂, TiO, NiO et des nanotubes de carbone.

6. Pâte brasable, film, bande, feuille, fil, préforme ou sphère comprenant la composition de brasage selon l'une quelconque des revendications 1 à 5.

7. Procédé de formation de la composition de brasage selon l'une quelconque des revendications 1 à 5, procédé comprenant le mélange de composants en poudre.

8. Procédé selon la revendication 7, dans lequel le premier composant en poudre se présente sous la forme d'une pâte et le second composant en poudre se présente sous la forme d'une préforme, d'une bande, d'un manchon, de disques, de sphères ou d'un fil.

9. Utilisation de la composition selon l'une quelconque des revendications 1 à 5 ou de la pâte brasable selon la revendication 6 dans un procédé de brasage.

10. Joint brasé comprenant la composition de l'une quelconque des revendications 1 à 5.
